# EUROPEAN PATENT APPLICATION

(11) **EP 3 228 545 A1**
(43) Date of publication of application: **11.10.2017**
(21) Application number: 17165262.1
(22) Date of filing: 06.04.2017
(51) Int. Cl.: B64D 27/10, B64D 27/02, B64D 27/24, F01K 11/02, F01K 23/10

(54) **HYBRID ELECTRIC AIRCRAFT WITH RANKINE CYCLE HEAT RECOVERY SYSTEM**

(30) Priority: 08.04.2016 US 201615094000
(71) Applicant: Hamilton Sundstrand Corporation, Charlotte, NC 28217-4578 (US)
(72) Inventor: HIMMELMANN, Richard A., Beloit, WI Wisconsin 53511 (US); TONGUE, Stephen E., Hampden, MA Massachusetts 01036 (US)
(74) Representative: Bridge, Kerry Ann

(57) **Abstract**

A propulsion system (10) includes a gas turbine engine (12), an electric motor system having a motor drive (18, 20) electrically connected to an electric machine (14) and an electric motor (22, 24) electrically connected to the motor drive where the electric motor drives a propulsion unit, an electric machine (14) rotatably attached to the gas turbine engine (12) and electrically connected to the electric motor system, an energy storage system (28) having bi-directional electrical connections with the electric motor system and the electric machine, and an Rankine cycle system (30) in communication with the gas turbine engine (12) for recovering waste heat from the gas turbine engine (12).

## Description

### CROSS-REFERENCE TO RELATED APPLICATION(S)

Reference is made to application Ser. No. entitled "Hybrid Electric Aircraft Propulsion Incorporating a Recuperated Prime Mover", which was filed on even date and assigned to the same assignee as this application.

### BACKGROUND

Conventional propulsion systems used on aircraft include turbo-jet, turbo-prop, and turbo-fan engines each having a core engine generally including, in axial flow series, an air intake, a low-pressure compressor (LPC), a high-pressure compressor (HPC), combustion equipment, a high-pressure turbine (HPT), a low-pressure turbine (LPT), and a core exhaust nozzle. The core engine works in a conventional manner such that air entering the air intake is accelerated and compressed by the LPC and directed into the HPC where further compression takes place. The compressed air exhausted from the HPC is directed into the combustion equipment where it is mixed with fuel and the mixture combusted. The resultant hot combustion products then expand through and thereby drive the high- and low-pressure turbines before being exhausted through the core exhaust nozzle. Conventional propulsion systems utilize thrust produced by expelling the core flow through the exhaust nozzle and, in the case of turbo-prop and turbo-fan engines, thrust produced by a fan driven by the gas turbine engine to propel aircraft during operation.

One attempt to improve fuel efficiency of aircraft propulsion engines involved the creation of hybrid electric propulsion systems, which additionally includes an electric generator driven by the gas turbine engine and an energy storage system for augmenting the gas turbine performance. The gas turbine engine can be designed to operate more efficiently over a narrower operating range while using the electric power from the generator and energy storage system to drive electric motors, extending the operational range of the gas turbine engine during take-off or other peak operational conditions. However, such systems still are susceptible to the thermal inefficiencies from the gas turbine engine, which decrease the efficiency of the overall propulsion system. Therefore, a need exists for a hybrid-electric aircraft propulsion system with improved thermal efficiency.

### SUMMARY

A propulsion system includes a gas turbine engine, an electric machine rotatably attached to the gas turbine engine, an electric motor system having a motor drive electrically connected to the electric machine and an electric motor electrically connected to the motor drive where the electric motor drives a propulsion unit, an energy storage system having bi-directional electrical connections with the electric motor system and the electric machine, and a Rankine cycle system in communication with the gas turbine engine for recovering waste heat energy from the gas turbine engine.

A method of operating a propulsion system includes providing a gas turbine engine, providing an electric motor system configured to drive a propulsion motor, providing an electric machine rotatably attached to the gas turbine engine and electrically connected to the electric motor system, providing an energy storage system having bi-directional electrical connections with the electric motor system and the electric machine, operating the gas turbine for a first period of time to provide electric power produced by the electric machine to the electric motor system and to recharge the energy storage system, and providing thermal energy from exhaust gases generated by the gas turbine to a Rankine cycle system to provide electric power.

### BRIEF DESCRIPTION OF THE DRAWINGS

FIG. 1 is a schematic view of a hybrid electric propulsion system having a gas turbine engine and a Rankine cycle (RC) waste heat recovery system.
FIG. 2 is a schematic view of the RC waste heat recovery system of Fig. 1.

### DETAILED DESCRIPTION

The present invention relates generally to hybrid electric propulsion systems, and more particularly to hybrid electric propulsion systems used for aircraft. An example of a hybrid electric propulsion system is disclosed in U.S. Patent Application Serial No. 14/339,132 filed July 23, 2014, entitled HYBRID ELECTRIC PULSED-POWER PROPULSION SYSTEM FOR AIRCRAFT and published as U.S. Patent Application Publication No. 2016/0023773, which is herein incorporated by reference in its entirety.

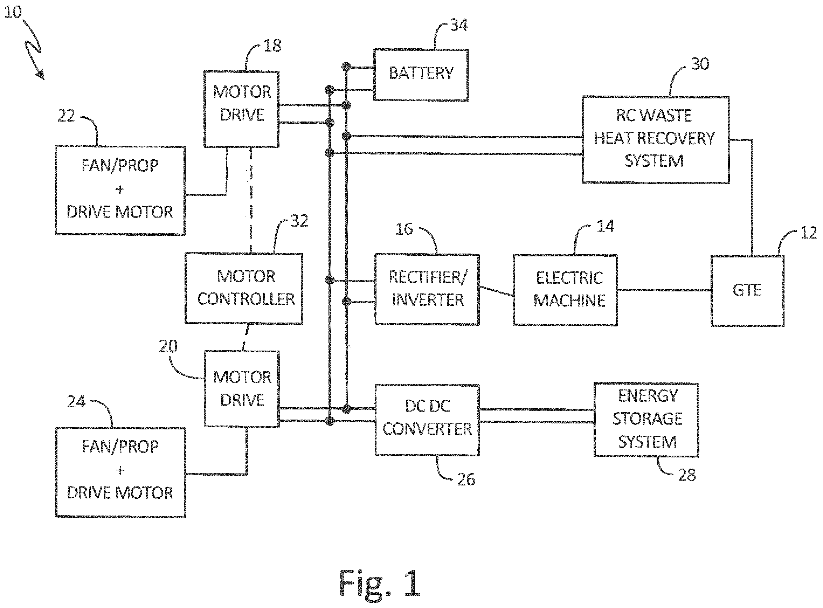

FIG. 1 is a schematic view of hybrid electric propulsion system 10 that utilizes pulsed-power propulsion. Hybrid electric propulsion system 10 includes gas turbine engine 12, electric machine 14, rectifier-inverter 16, motor drives 18 and 20, propulsion units 22 and 24, converter-charger 26, energy storage system 28 and Rankine cycle (RC) system 30. Generally, propulsion system 10 operates gas turbine engine 12 in an on-off or pulsed manner to provide electric power to motor drives 18 and 20 for driving propulsion units 22 and 24, respectively. Propulsion units 22 and 24 are used to provide propulsion to an aircraft. However, it will be appreciated by persons skilled in the art that propulsion system 10 can be utilized on other vehicles to achieve greater fuel efficiency than a conventional propulsion system.

Conventional propulsion systems have gas turbine engines designed to function during several operating conditions. Operating conditions include ground idle, takeoff, climb, cruise, loiter, egress, approach and landing. Typically, in a turbo-prop engine it is desirable to run the propeller or fan at a fixed rpm for aerodynamic efficiency. Since the low-pressure turbine (LPT) or free turbine is mechanically linked to the propeller or fan, it must turn at a fixed rpm along with the propeller. Depending on the propeller or fan mode selected, the rotational speed may vary in the range of 100% to 80% of a maximum normal-operating rotational speed. "Maximum normal-operating speed" corresponds to the maximum, steady-state rotational speed at which the component is designed to operate. The high-pressure turbine (HPT) and high-pressure compressor (HPC) speeds vary depending on how much power is required. The typical rotational speed range for the HPC and HPT is between 100% and 50% of a maximum, normal-operating, rotational speed, which corresponds to a power output range. To function during multiple operating conditions, rotor geometries, stator geometries, and rotational speeds are designed to provide the most efficient compromise among the different operational conditions because optimizing for a single operating condition can cause conventional gas turbine engines to have bad performance or not function during other operating conditions.

By contrast, gas turbine engine 12 is required to operate and is optimized for operation at a single operating condition, typically referred to as maximum continuous power output. "Maximum continuous power output" refers to the maximum, steady-state, power output produced by gas turbine engine 12 during operation, and generally corresponds to take-off operating conditions. Because gas turbine engine 12 is only required to operate at maximum continuous output, optimizing of gas turbine engine 12 does not require design compromises among several operating conditions and enables gas turbine engine 12 to have greater fuel efficiency than conventional gas turbine engines. Single operation condition designs have several advantages including optimized rotor blade and vane geometry, optimized flow path geometry including air inlets and exhaust nozzles, and optimized fuel combustion. Moreover, because gas turbine engine 12 is incorporated into propulsion system 10 that uses electric motors to drive propulsion units 22 and 24, gas turbine engine 12 can be designed without bleed air (e.g., air bled from the high and low pressure compressors to operate aircraft functions). Gas turbine engine 12 can be located co-axially with one of propulsion units 22 and 24, such as in conventional propulsion systems, or can be remotely located in the aircraft for optimal weight distribution or another practical reason. Gas turbine engine 12 can also be designed without and does not require gearboxes or other mechanical connections necessary to utilize the power generated from gas turbine 12 for propulsion because most electrical machines benefit from the higher speeds associated with gas turbines. Instead, gas turbine engine 12 is used to generate electrical power that can be transited through cables, wires, or other electrical conductors. Although described with reference to gas turbine engine 12, other engine types, for example air-breathing piston engines and rotary engines (e.g., Wankle engines), can be adapted to pulsed-power operation by optimizing the engine for a single operating condition. If such engines are implemented in an aircraft, the inlet air can be compressed by a turbocharger or other similar device to enable the engine to operate at altitude.

Gas turbine engine 12 can also be used to generate electric power for systems other than propulsion system 10. For example, electric power could be used for on-board systems such as radar, directed energy weapons, cockpit power, environmental temperature and pressure control, and other electrical devices and systems.

Electric machine 14 is mechanically attached to gas turbine engine 12. For instance, electric machine 14 can be mounted co-axially with or mechanically linked at the LPT shaft. As described in greater detail below, electric machine 14 can function as a generator or as a motor in different operation phases. Electric machine 14 can be located downstream of the LPT or upstream of the low-pressure compressor (LPC). Electric machine 14 includes an arrangement of windings forming a stator and an arrangement of magnets that form a rotor. The windings of electric machine 14 include conductors, such as copper wires, that are mutually insulated from each other and that are wound around a generally cylindrical metallic core. The magnets of electric machine 14 are preferably permanent magnets because permanent magnets do not require external excitation during operation. However, the magnets of electric machine 14 could be electromagnets powered by a direct current (DC) source, an induction machine, a switch reluctance machine, or a combination electric machine such as permanent magnets that rely on reluctance for added performance. The combination of windings and magnets is determined by the electric power requirements of propulsion system 10 and/or other on-board systems and gas-turbine operation, the electric power and operational requirements being determined with engineering methods known in the art.

When electric machine 14 functions as a generator, the magnets are attached to and rotate with an output shaft (not shown) of gas turbine engine 12, such as a shaft connected to the LPT. The magnetic field produced by the magnets rotates with gas turbine engine 12 and interacts with the windings of electric machine 14. Generally, the windings of electric machine 14 are stationary; however electric machine 14 will function so long as there is relative movement between the windings and magnets. The interaction between the magnetic field produced by the magnets and the windings induces a current in the windings that are electrically connected to rectifier-inverter 16. The electric power generated by electric machine 14 can be directed to drive propulsion units 22 and 24 (or other on-board systems), to charge energy storage system 28, or to drive propulsion units 22 and 24 while charging energy storage system 28.

Electric machine 14 can also function as a motor when three-phase, alternating current is supplied by rectifier-inverter 16 to the windings of electric machine 14. Each phase of the supplied current is out-of-phase with each other such that the interaction of the magnetic field with the magnets attached to gas turbine engine 12 causes a portion of it to rotate. When used as a motor, electric machine 14 can be designed to restart gas turbine engine 12 during flight.

Rectifier-inverter 16 rectifies alternating current generated by electric machine 14 when it functions as a generator and inverts direct current to alternating current when electric motor 14 functions as a motor. To facilitate its dual purpose, rectifier-inverter 16 is equipped with bi-directional electrical connections for its connection to motor drives 18 and 20 and electric machine 14. In some embodiments, rectifier-inverter 16 can be a passive rectifier in which converter-charger 26 is needed to control the direct current bus voltage. In other embodiments, rectifier-inverter 16 can be an active rectifier that controls the direct current bus voltage, thereby eliminating the need for converter-charger 26 to control the direct current bus voltage. The design of rectifier-inverter 16 is dependent on the power requirements of propulsion system 10 and/or other on-board systems and can be determined using conventional design methods.

Motor drives 18 and 20 manage the power input into propulsion units 22 and 24, respectively. Motor drives 18 and 20 receive control signals from motor controller 32 to regulate electric power received from energy storage system 28 or generator 14. By increasing or decreasing the electric power entering propulsion units 22 and 24, motor drives 18 and 20 can control the operation of propulsion units 22 and 24, respectively, and, therefore, the thrust being provided by the propeller or fan to the aircraft.

Propulsion units 22 and 24 are propulsion devices adapted to be driven by one or more electric motors. In one embodiment, propulsion units 22 and 24 each include a propeller unit driven by an electric motor. The propeller units and the corresponding electric motors can be designed to accommodate a vertical take-off in which the lift produced by the propeller units when oriented parallel to the ground is sufficient to raise the aircraft in the air in a helicopter-like manner. If the aircraft is equipped with fixed-wings, the propeller units can be used to propel the aircraft horizontally through the airstream. Although propulsion units 22 and 24 are described in the context of two separate propeller units, it will be appreciated by persons skilled in the art that a single propeller system can be used with a single motor drive or that other motor drive and propulsion means could be implemented within propulsion system 10. For example, in one embodiment, propulsion units 22 and 24 are ducted fans. In another embodiment, propulsion unit 24 is omitted and a single propulsion unit (propulsion unit 22) includes two, counter-rotating propeller units driven by two electric motors. In another embodiment, two gas turbine engines 12 are utilized, one gas turbine engine for each propulsion unit.

In some embodiments, motor drives 18 and 20 can function as active rectifier-inverters such that the electric motors connected to propulsion units 22 and 24 function as generators to create electric power from windmilling propeller units. "Windmilling" refers to the rotation of the propeller units caused by the flow of air through each unit when gas turbine engine 12 is not operating. In such an embodiment, propulsion units 22 and 24 act as large ram air turbines, thus eliminating the need to have a ram air turbine (RAT) on the aircraft as a backup system.

Converter-charger 26 performs at least two functions within propulsion system 10. First, converter-charger 26 regulates direct current entering energy storage system 28 when it is charging. Second, converter-charger 26 regulates the voltage supplied to propulsion units 22 and 24 when energy storage system 28 discharges. To facilitate this dual purpose, converter-charger 26 has bi-directional electrical connections to energy storage system 28, rectifier-inverter 16, and motor drives 18 and 20.

Energy storage system 28 includes one or more rechargeable components capable of storing electrical energy. In one embodiment, energy storage system 28 can include an arrangement of rechargeable batteries. The capacity of energy storage system 28 is dependent upon gas turbine engine 12 operation, the power requirements of propulsion units 22 and 24, and the power requirements of other aircraft systems receiving power from propulsion system 10. When propulsion system 10 allows a longer discharge period, the capacity of energy storage system 28 can be larger. By contrast, the capacity of energy storage system 28 can be smaller when propulsion system allows a shorter discharge period.

Propulsion system 10 can also include emergency energy storage system 34. Emergency energy storage system 34 is utilized in the event that gas turbine engine 12, electric machine 14 or rectifier-inverter 16 experiences a catastrophic failure. Emergency energy storage system 34 is designed to provide enough power to propulsion units 22 and 24 to allow the aircraft to make a safe (powered) landing at a nearby airport if power from gas turbine engine 12 becomes unavailable. In some embodiments, emergency energy storage system 34 is a non-rechargeable energy source.

Propulsion system 10 also includes RC system 30. RC system 30 recovers heat from the exhaust of gas turbine engine 12. Propulsion units 22 and 24 provide the primary means for moving the aircraft on which propulsion system 10 is deployed. Thus, while gas turbine engine 12 may provide some amount of thrust to the aircraft when operational, it is not a necessary requirement of gas turbine engine 12. Since gas turbine engine 12 is not primarily used for directly providing propulsion itself, the exhaust from gas turbine engine 12 can be used as a heat transfer fluid. In conventional gas turbine engines that provide thrust to an aircraft, utilizing the exhaust as a heat transfer fluid reduces the amount of thrust provided by the gas turbine engine and reduces overall performance. In propulsion system 10, this is not an issue, however. And recovering the heat energy leaving the turbine of gas turbine engine 12 increases the net efficiency of propulsion system 10 even though its thrust can be significantly reduced. In some embodiments, the amount of propulsion provided by gas turbine engine 12 is no more than 10% of the total propulsion (e.g., propulsion provided by propulsion units 22 and 24 and gas turbine engine 12). In still further embodiments, the amount of propulsion provided by gas turbine engine 12 is no more than 5% of the total propulsion.

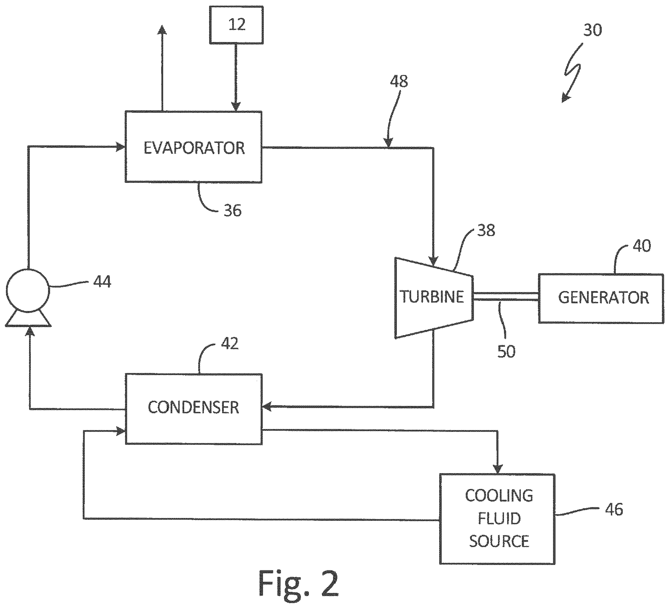

Fig. 2 illustrates the components of RC system 30. RC system 30 includes evaporator 36, turbine 38, generator 40, condenser 42, pump 44, cooling fluid source 46 and working fluid conduit network 48. Evaporator 36, turbine 38, condenser 42 and pump 44 are fluidly connected by fluid conduit network 48 and a working fluid is moved therethrough by means of pump 44.

During operation, heat from the exhaust of gas turbine engine 12 is transferred to pressurized working fluid in evaporator 36. In one embodiment, evaporator 36 is disposed within the exhaust duct of gas turbine engine 12 and the exhaust gases from gas turbine engine 12 are directed through one side of evaporator 36. In other embodiments, the exhaust gases of gas turbine engine 12 are directed through an intermediate heat exchanger to heat a heat transfer fluid, which is then directed through one side of evaporator 36. Energy from the exhaust gases or heat transfer fluid is used to heat the pressurized working fluid in evaporator 36 to move the working fluid from a saturated liquid state to a saturated vapor state (i.e. superheated vapor). After passing through evaporator 36, exhaust gases are dumped overboard or used to provide a small amount of thrust and heat transfer fluid is returned to the intermediate heat exchanger.

The working fluid, as a superheated vapor, then enters turbine 38 where it expands and produces work by driving one or more sets of turbine blades. The blades of turbine 38 are engaged to shaft 50, which is connected to generator 40. Generator 40 functions similarly to generator 14. The electric power generated by generator 40 can be directed to drive propulsion units 22 and 24 (or other on-board systems), to charge energy storage system 28, or to drive propulsion units 22 and 24 while charging energy storage system 28.

The working fluid enters condenser 42 at a lower pressure than it entered turbine 38. The working fluid is cooled in condenser 42 by a cooling fluid from cooling fluid source 46 so that the working fluid is returned to a liquid state. Cooling fluid source 46 can be atmospheric air or ram air. The working fluid is then pressurized by pump 44 before returning to evaporator 36 and the process is repeated.

The working fluid contained within RC system 30 can be an organic fluid. In these embodiments, RC system is an organic Rankine cycle (ORC) system. The working fluid contained within RC system 30 can also be a non-organic fluid, such as water. The choice of working fluid depends on a number of factors, including (1) the temperature of the exhaust gases from gas turbine engine 12, (2) whether exhaust gases or a heat exchange fluid is delivered to evaporator 36 and (3) the amount of power needed from generator 40. Examples of suitable working fluids for RC system 30 include organosilicon compounds like hexamethyldisiloxane and octamethyltrisiloxane, fluorocarbons, hydrofluorocarbons like 1,1,1,2-tetrafluoroethane and 1,1,1,3,3-pentafluoropropane, carbon dioxide, water and multi-phase refrigerants.

Conventional propulsion systems are designed for the maximum horsepower condition and operate at a reduced speed during flight or the cruise, loiter, and egress operating conditions. Operating at reduced speeds can result in less efficient operating during the longest portions of the flight.

Hybrid electric propulsion systems can be more efficient than conventional propulsion systems because they can be designed to operate efficiently at less than the maximum horsepower condition by relying on the energy storage system to provide the additional power during a maximum horsepower condition. However, hybrid electric propulsion systems typically require the gas turbine engine to operate continuously and consequently tend to be less efficient during the longest portions of a flight.

Pulsed-power hybrid electric propulsion systems such as propulsion system 10 only operate gas turbine engine 12 at its most efficient design condition, maximum power output. When gas turbine engine 12 is not operating, energy storage system 28 provides electric power to propulsion units 22 and 24. The resulting pulsed-power operation operates gas turbine engine 12 for a fraction of the in-flight time corresponding to the cruise, loiter, and egress operating conditions.

Furthermore, because gas turbine engine 12 contributes only a minimal amount of thrust used for propulsion, if any, the heat of the exhaust gases generated by gas turbine engine 12 can be utilized for further power generation. While RC system 30 adds weight and cost to propulsion system 10, the increase in electric power generation more than make up for these disadvantages. It is believed that a reduction of fuel burn of more than 20% compared to a hybrid electric propulsion system without RC system 30 can be achieved using propulsion system 10 described herein. Propulsion system 10, therefore, can be more fuel efficient than a conventional or hybrid electric propulsion system.

While the present disclosure has emphasized pulsed-power hybrid electric propulsion systems, any hybrid electric propulsion system would benefit from the waste heat recovery provided by RC system 30. For example, some propulsion systems 10 size gas turbine engine 12 for maximum continuous power output at cruising speed and augment propulsion units 22 and 24 with power from batteries during take-off. Other types of propulsion systems (e.g., reciprocating or rotary engines) can also derive benefits from RC system 30.

### Discussion of Possible Embodiments

The following are non-exclusive descriptions of possible embodiments of the present invention.

A propulsion system can include a gas turbine engine, an electric machine rotatably attached to the gas turbine engine, an electric motor system having a motor drive electrically connected to the electric machine and an electric motor electrically connected to the motor drive where the electric motor drives a propulsion unit, an energy storage system having bi-directional electrical connections with the electric motor system and the electric machine, and a Rankine cycle system in communication with the gas turbine engine for recovering waste heat energy from the gas turbine engine.

The system of the preceding paragraph can optionally include, additionally and/or alternatively any, one or more of the following features, configurations and/or additional components:

The system can further include a rectifier-inverter that has bi-directional electrical connections between the electric machine and the electric motor system and between the electric machine and the energy storage system where the rectifier-inverter rectifies electric power delivered by the electric machine to the electric motor system and the energy storage system and where the rectifier-inverter inverts power delivered by the electric motor system and the energy storage system to the electric machine, and a converter that has bi-directional electrical connections between the energy storage system and the electric motor system and between the energy storage system and the electric machine where the converter regulates the voltage outputted by the energy storage system to the electric machine and the electric motor system and where the converter regulates current delivered by the electric motor system and the electric machine to the energy storage system.

Any of the above systems can further include an emergency energy storage system electrically connected to the electric motor system for providing power to the electric motor system in case of gas turbine engine failure.

In any of the above systems the Rankine cycle system can include a pump for pressurizing a working fluid, an evaporator configured to transfer thermal energy from the gas turbine engine to pressurized working fluid, a turbine located downstream from the evaporator for expanding and extracting work from the working fluid, and a condenser located downstream from the turbine for cooling the working fluid.

In any of the above systems the gas turbine engine can include an exhaust duct where the evaporator of the Rankine cycle system communicates with the exhaust duct of the gas turbine engine.

Any of the above systems can further include an intermediate heat exchanger in communication with the exhaust duct of the gas turbine engine and the evaporator of the Rankine cycle system.

In any of the above systems the working fluid can be selected from the group consisting of: organosilicon compounds, fluorocarbons, hydrofluorocarbons, carbon dioxide and multi-phase refrigerants.

Any of the above systems can further include a generator rotatably attached to the turbine of the Rankine cycle system.

In any of the above systems the generator can be electrically connected to the electric motor system.

In any of the above systems the gas turbine engine is configured to provide no more than 10% of propulsion provided by the propulsion system.

In any of the above systems the Rankine cycle system can be an organic Rankine cycle system.

A method of operating a propulsion system can include providing a gas turbine engine, providing an electric motor system configured to drive a propulsion motor, providing an electric machine rotatably attached to the gas turbine engine and electrically connected to the electric motor system, providing an energy storage system having bi-directional electrical connections with the electric motor system and the electric machine, operating the gas turbine for a first period of time to provide electric power produced by the electric machine to the electric motor system and to recharge the energy storage system, and providing thermal energy from exhaust gases generated by the gas turbine to a Rankine cycle system to provide electric power.

The method of the preceding paragraph can optionally include, additionally and/or alternatively any, one or more of the following features, configurations and/or additional components:

The method can further include that the gas turbine is operated for a first period of time to provide electric power produced by the electric machine to the electric motor system and to recharge the energy storage system, and further include turning off the gas turbine for a second period of time and discharging the energy storage system to operate the electric motor system during the second period of time.

In any of the above methods the first period of time can be less than the second period of time.

In any of the above methods providing thermal energy from the exhaust gases generated by the gas turbine to the Rankine cycle system to provide electric power can include delivering the exhaust gases to an evaporator of the Rankine cycle system to heat a working fluid from which work is extracted to generate electric power.

In any of the above methods providing thermal energy from the exhaust gases generated by the gas turbine to the Rankine cycle system to provide electric power can include delivering the exhaust gases to an intermediate heat exchanger to heat a heat exchange fluid and delivering the heat exchange fluid to an evaporator of the Rankine cycle system to heat a working fluid from which work is extracted to generate electric power.

In any of the above methods the gas turbine engine provides no more than 10% of propulsion provided by the propulsion system.

In any of the above methods the Rankine cycle system can be an organic Rankine cycle system.

An aircraft can include a propulsion system having a gas turbine engine, an electric machine rotatably attached to the gas turbine engine, an electric motor system having a motor drive electrically connected to the electric machine and an electric motor electrically connected to the motor drive where the electric motor drives a propulsion unit, an energy storage system having bi-directional electrical connections with the electric motor system and the electric machine, and a Rankine cycle system in communication with the gas turbine engine for recovering waste heat energy from the gas turbine engine.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A propulsion system comprising:
a gas turbine engine;
an electric machine rotatably attached to the gas turbine engine;
an electric motor system comprising:
a motor drive electrically connected to the electric machine; and
an electric motor electrically connected to the motor drive, wherein the electric motor drives a propulsion unit;
an energy storage system having bi-directional electrical connections with the electric motor system and the electric machine; and
a Rankine cycle system in communication with the gas turbine engine for recovering waste heat energy from the gas turbine engine.

2. The system of claim 1, further comprising:
a rectifier-inverter that has bi-directional electrical connections between the electric machine and the electric motor system and between the electric machine and the energy storage system, wherein the rectifier-inverter rectifies electric power delivered by the electric machine to the electric motor system and the energy storage system, and wherein the rectifier-inverter inverts power delivered by the electric motor system and the energy storage system to the electric machine; and
a converter that has bi-directional electrical connections between the energy storage system and the electric motor system and between the energy storage system and the electric machine, wherein the converter regulates the voltage outputted by the energy storage system to the electric machine and the electric motor system, and wherein the converter regulates current delivered by the electric motor system and the electric machine to the energy storage system.

3. The system of claim 1 or 2, further comprising an emergency energy storage system electrically connected to the electric motor system for providing power to the electric motor system in case of gas turbine engine failure.

4. The system of any preceding claim, wherein the Rankine cycle system comprises:
a pump for pressurizing a working fluid;
an evaporator configured to transfer thermal energy from the gas turbine engine to pressurized working fluid;
a turbine located downstream from the evaporator for expanding and extracting work from the working fluid; and
a condenser located downstream from the turbine for cooling the working fluid.

5. The system of claim 4, wherein the gas turbine engine comprises an exhaust duct, and wherein the evaporator of the Rankine cycle system communicates with the exhaust duct of the gas turbine engine.

6. The system of claim 4, further comprising:
an intermediate heat exchanger in communication with the exhaust duct of the gas turbine engine and the evaporator of the Rankine cycle system.

7. The system of claim 4, wherein the working fluid is selected from the group consisting of: organosilicon compounds, fluorocarbons, hydrofluorocarbons, carbon dioxide and multi-phase refrigerants.

8. The system of claim 4, further comprising:
a generator rotatably attached to the turbine of the Rankine cycle system, and optionally
wherein the generator is electrically connected to the electric motor system.

9. The system of any preceding claim, wherein the gas turbine engine is configured to provide no more than 10% of propulsion provided by the propulsion system, and/or wherein the Rankine cycle system is an organic Rankine cycle system.

10. A method of operating a propulsion system, the method comprising:
providing a gas turbine engine;
providing an electric motor system configured to drive a propulsion motor;
providing an electric machine rotatably attached to the gas turbine engine and electrically connected to the electric motor system;
providing an energy storage system having bi-directional electrical connections with the electric motor system and the electric machine;
operating the gas turbine for a first period of time to provide electric power produced by the electric machine to the electric motor system and to recharge the energy storage system; and
providing thermal energy from exhaust gases generated by the gas turbine to an Rankine cycle system to provide electric power.

11. The method of claim 10, wherein the gas turbine is operated for a first period of time to provide electric power produced by the electric machine to the electric motor system and to recharge the energy storage system, and further comprising:
turning off the gas turbine for a second period of time; and
discharging the energy storage system to operate the electric motor system during the second period of time, and optionally
wherein the first period of time is less than the second period of time.

12. The method of claim 10 or 11, wherein providing thermal energy from the exhaust gases generated by the gas turbine to an Rankine cycle system to provide electric power comprises:
delivering the exhaust gases to an evaporator of the Rankine cycle system to heat a working fluid from which work is extracted to generate electric power.

13. The method of claim 10, 11 or 12, wherein providing thermal energy from the exhaust gases generated by the gas turbine to an Rankine cycle system to provide electric power comprises:
delivering the exhaust gases to an intermediate heat exchanger to heat a heat exchange fluid; and
delivering the heat exchange fluid to an evaporator of the Rankine cycle system to heat a working fluid from which work is extracted to generate electric power.

14. The method of any of claims 10 to 13, wherein the gas turbine engine provides no more than 10% of propulsion provided by the propulsion system, and/or
wherein the Rankine cycle system is an organic Rankine cycle system.

15. An aircraft comprising:
the propulsion system of any of claims 1 to 9.
